# EUROPÄISCHE PATENTSCHRIFT

(11) **EP 0 515 392 B1**
(45) Veröffentlichungstag und Bekanntmachung des Hinweises auf die Patenterteilung: **13.04.1994**
(21) Anmeldenummer: 91902403.4
(22) Anmeldetag: 18.01.1991
(51) Int. Cl.: F16K 47/02

(54) **SCHLIESSDÄMPFER FÜR EINE SANITÄRE WASSERARMATUR**
CLOSING DAMPER FOR A TAP
RALENTISSEUR DE LA FERMETURE DE ROBINETTERIES SANITAIRES A EAU

(30) Priorität: 15.02.1990 DE 4004700
(43) Veröffentlichungstag der Anmeldung: 02.12.1992
(73) Patentinhaber: IDEAL-STANDARD GMBH, D-53008 Bonn (DE)
(72) Erfinder: BERGMANN, Konrad, D-5560 Wittlich (DE)
(74) Vertreter: Müller, Karl-Ernst, Dr., Dipl.-Ing.
(86) Internationale Anmeldenummer: DE9100045
(87) Internationale Veröffentlichungsnummer: WO9112454

(56) Entgegenhaltungen:
- EP-A- 0 214 358
- WO-A-88/03240
- WO-A-89/05388
- DE-C- 3 629 569

## Beschreibung

Die Erfindung betrifft eine sanitäre Wasserarmatur, insbesondere in der Form einer Eingriff-Mischbatterie, mit einem Gehäuse, mit einem Betätigungsgriff und mit einer Scheiben, Kolben, Kugeln oder dergleichen aufweisenden Steuereinheit sowie mit einem zwischen dem Griff und der Steuereinheit oder zwischen dem Griff und dem Armaturengehäuse angeordneten Schließdämpfer zur Verlängerung der Schließzeit und Herabsetzung der Schließgeschwindig- keit, wobei der Schließdämpfer als flüssigkeitsgefüllte Kolben-Zylinder-Einheit ausgebildet ist.

Eine gattungsgemäße Wasserarmatur ist in der EP-A-0 214 358 beschrieben, wonach zwischen dem Griff und der Steuereinheit oder zwischen dem Griff und dem Armaturengehäuse ein Schließdämpfer angeordnet ist, der für eine Verlängerung der Schließzeit und eine Herabsetzung der Schließgeschwindigkeit sorgt. Das Dokument beschränkt sich hinsichtlich seines Lösungsvorschlages für die konkrete Ausbildung des Schließdämpfers auf den Hinweis auf eine Kolben-Zylinder-Einheit, bei der insbesondere Flüssigkeit zwischen dem Dämpfungskolben sowie dem Dämpfungszylinder komprimiert wird, was in der Endphase des Schließvorganges der gattungsgemäßen sanitären Wasserarmatur zwangsläufig zu einer Verlängerung der Schließzeit und Herabsetzung der Schließgeschwindigkeit führt, ohne daß dies für den Benutzer störend ist.

Der vorliegenden Erfindung liegt daher die Aufgabe zugrunde, in Fortbildung der gattungsgemäßen Wasserarmatur einen Lösungsvorschlag für eine zweckmäßige Ausbildung der Kolben-Zylinder-Einheit als Schließdämpfer zu unterbreiten.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung schlägt in ihrem Grundgedanken vor, daß eine flüssigkeitsdichte Membran die Kolben-Zylinder-Einheit außen umschließend mit dem Zylinder einerseits und dem Kolben andererseits jeweils flüssigkeitsdicht verbunden ist und bei eingeschobenem Kolben eine Membrankammer ausbildet und daß zwischen dem Innenraum des gegen den Kolben abgedichteten Zylinders und dessen von der Membran umschlossenen Außenseite eine Fließverbindung besteht. Damit wird der Gedanke einer ausschließlichen Komprimierung der Flüssigkeit bei der Schließbewegung verlassen, weil die im Zylinderinnenraum befindliche und bei der Einschubbewegung des Kolbens zunächst komprimierte Flüssigkeit über einen definierten Abströmweg in eine von einer außen die Kolben-Zylinder-Einheit flüssigkeitsdicht umschließenden Membran gebildete Membrankammer verdrängt wird und bei der Ausschubbewegung des Kolbens in den Innenraum zurückströmt. Hiermit ist der Vorteil verbunden, daß der Schließdämpfer in seinem Dämpfungsverhalten bei der Schließbewegung der Armatur besser einstellbar ist und daß er bei Öffnung der Wasserarmatur schneller seine Ausgangsstellung für die Schließbewegung einnimmt, indem die Flüssigkeit schnell in den Zylinderinnenraum zurückströmen kann.

Ein Ausführungsbeispiel der Erfindung sieht hierzu vor, daß der Kolben gegen den Zylinder über einen in eine umlaufende Kolbennut eingelegten Dichtungsring flüssigkeitsdicht abgedichtet ist, wobei die Nut über einen Umfangsabschnitt eine Kerbe zur Ausbildung einer den Dichtungsring umgehenden Fließverbindung vom Zylinderinnenraum mit der an der Außenseite angeordneten Membrankammer aufweist. Damit ist gewährleistet, daß die Flüssigkeit bei der Einschub- bzw. Ausschubbewegung des Kolbens an dem Dichtungsring vorbei in die außen von der Membran gebildete Flüssigkeitskammer bzw. von hier zurück in den Zylinderinnenraum strömen kann. Hierzu ist vorgesehen, daß die in Bewegungsrichtung des Kolbens bestimmte Höhe der Kolbennut größer ist als der Durchmesser des Dichtungsringes, so daß der Dichtungsring sich der Einschub- bzw. Ausschubbewegung des Kolbens gegenüber dem Zylinder folgend entsprechend verlagert und so die durch die Kerbgestaltung geschaffene Fließverbindung jeweils mehr oder weniger freigibt.

Nach einem Ausführungsbeispiel der Erfindung ist vorgesehen, daß die Kerbe aus einer kolbenseitigen Vertiefung der Kolbennut besteht und sich bis zum Kolbenende erstreckt. Hierbei ist es vorteilhaft, daß nach einer Ausführungsform der Erfindung die Kerbe mit einem sich in Ausschubrichtung des Kolbens verengenden Abschnitt die zugeordnete Oberkante der Kolbennut überragt, weil hierdurch sichergestellt ist, daß die Kerbe bei der Verlagerung des Dichtungsringes in der Nut nicht völlig geschlossen werden kann, so daß ein Blockieren der Kolbenbewegung ausgeschlossen ist.

Nach einem bevorzugten Ausführungsbeispiel der Erfindung reichen als Fließverbindung zwischen dem Zylinderinnenraum und der Membrankammer in dem Bereich der gegenseitigen Anlage von Kolben und Zylinder die üblichen Bautoleranzen des Kolbens einerseits und des Zylinders andererseits aus, weil die Flüssigkeit nach dem Durchtritt durch die Kerbe und dem Vorbeiströmen an dem Dichtungsring sich in dem zwischen Kolbenaußenseite und Zylinderinnenseite gelegenen Ringraum ausbreiten und von hier aus in die Membrankammer strömen kann. Die Erfindung erstreckt sich aber auch darauf, in Fortsetzung der Kerbe einen vorgeprägten Fließweg durch eine zugeordnete Vertiefung der Kolben- oder der Zylinderwandung vorzugeben.

Gemäß der Erfindung ist weiterhin der Kolben durch eine zwischen Kolben und Zylinder angeordnete Feder in seine Ausschubstellung belastet, die der Öffnungsstellung der Wasserarmatur entspricht.

In der Zeichnung ist ein Ausführungsbeispiel der Erfindung wiedergegeben, welches nachstehend beschrieben ist.
Es zeigen:

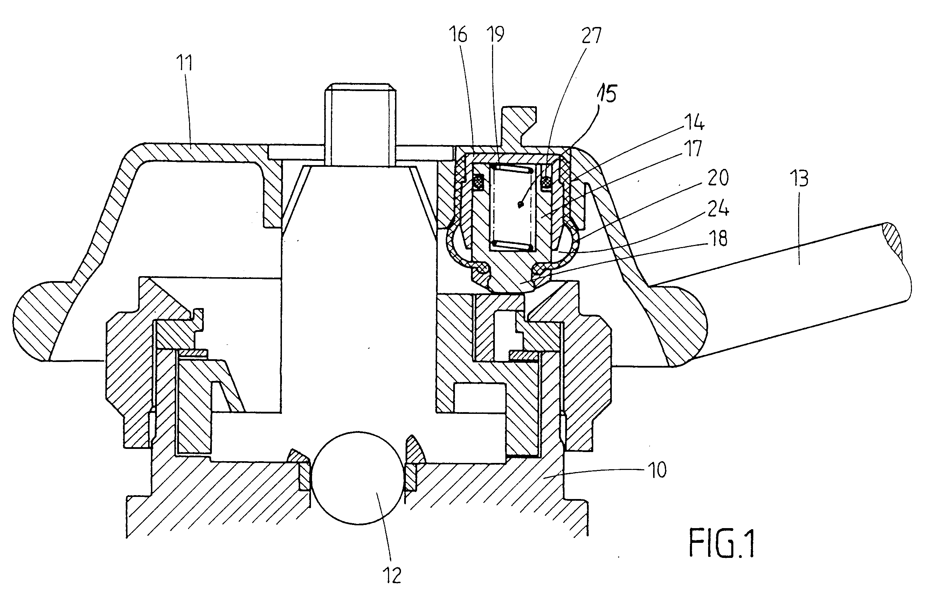

- Fig. 1: den kappenförmigen Teil des Griffhebels einer Wasserarmatur mit Schließdämpfer im Schnitt,
- Fig. 2: den Schließdämpfer in einer vergrößerten Darstellung im Schnitt in teils geschlossener, teils geöffneter Darstellung,
- Fig. 3: eine Draufsicht auf den Kolben des Schließdämpfers,
- Fig. 4: eine herausgezogene Seitenansicht der in der Kolbennut ausgebildeten Kerbe.

Auf dem Oberteil eines Gehäuses 10 ist eine Griffkappe 11 um eine Achse 12 schwenkbar angeordnet, die über einen Griffhehel 13 betätigbar ist. In einer zugeordneten Bohrung 14 an der Innenseite der Griffkappe 11 ist ein Schließdämpfer 15 im Preßsitz eingedrückt, der aus einem Zylinder 16 und einen in diesem mit einer Einschub- und einer Ausschubbewegung beweglichen Kolben 17 besteht. Der Kolben 17 stützt sich mit einem oberen Fortsatz 18 an dem Gehäuse 10 ab und ist in seine Ausschubstellung über eine im Zylinderinnenraum angeordnete, sich zwischen dem Zylinder 16 und dem Kolben 17 abstützende Feder 19 belastet.

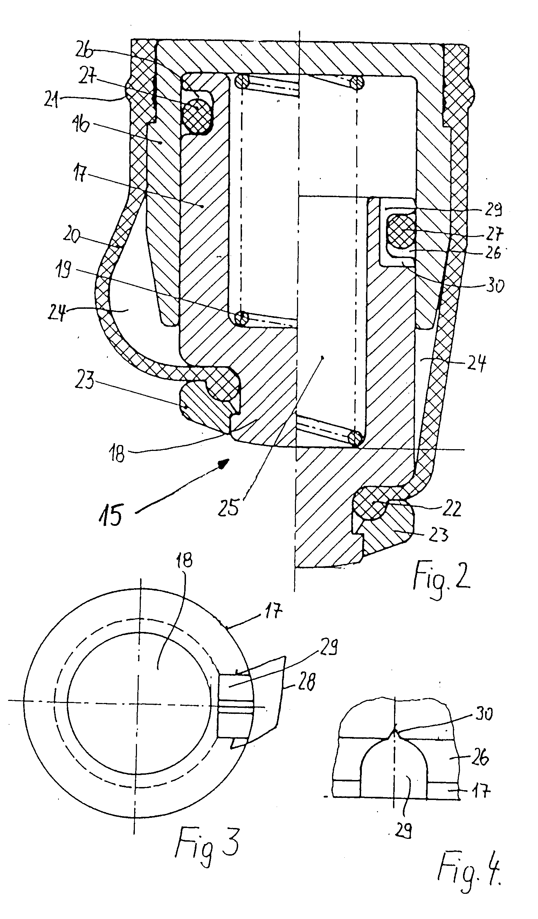

Aus Figur 2 ergibt sich der Schließdämpfer 15 in einer deutlicheren Darstellung. Auf seiner Außenseite ist eine flüssigkeitsdichte Membran angeordnet, die mit ihrem einen Ende einerseits mit einem einen Hinterschnitt des Zylinders 16 hintergreifenden Vorsprung festgelegt ist und andererseits eine nach außen ragende Wulst 21 aufweist, so daß durch das Eindrücken des Zylinders des Schließdämpfers 15 in die zugeordnete Bohrung 14 der Griffkappe 11 eine feste und flüssigkeitsdichte Verbindung zwischen dem Zylinder 16 und der Membran 20 geschaffen ist. Das andere Ende der Membran 20 mit einer Dichtwulst 22 ist über ein Klemmstück 23 mit dem Kolben 17 flüssigkeitsdicht verbunden. Die Membran 20 ist dabei so bemessen, daß sie der Einschub- bzw. Ausschubbewegung des Kolbens 17 folgt und bei eingeschobenem Kolben 17 aufgrund ihrer zugeordneten Abmessung eine Membrankammer 24 bildet, während sie bei ausgeschobenem Kolben 17 an der Außenseite des Zylinders 16 bzw. des Kolbens 17 anliegt.

Zylinder 16 und Kolben 17 sind jeweils U-förmig mit ihren offenen Seiten ineinander einschiebbar ausgebildet, so daß sich ein Zylinderinnenraum 25 als ein ausreichender Flüssigkeitsspeicher ergibt. Auf seiner Außenseite weist der Kolben 17 eine Kolbennut 26 auf, in die ein O-Ring als Dichtungsring 27 eingesetzt ist. Die Tiefe der Nut 26 ist dabei so bemessen, daß sich bei der Bewegung von Kolben 17 und Zylinder 16 gegeneinander eine flüssigkeitsdichte Abdichtung der Bauteile gegeneinander ergibt. In Bewegungsrichtung des Kolbens 17 ist die Höhe der Nut 26 größer bemessen als der Durchmesser des Dichtungsringes 27, so daß sich bei der Bewegung des Kolbens 17 gegenüber dem Zylinder 16 eine Verlagerung des Dichtungsringes 27 in der Kolbennut 26 entsprechend der Einschubbzw. Ausschubbewegung des Kolbens 17 ergibt.

Über einen Umfangsabschnitt 28 (Figur 3) ist die Kolbennut 26 von einer Kerbe 29 überlagert, die vom Ende des Kolbens 17 bis über die Kolbennut 26 hinausreicht, und sich in einem die Kolbennut 26 in Ausschubrichtung des Kolbens 17 überragenden Teil 30 verengt. Die Tiefe der Kerbe 29 ist größer bemessen als die Tiefe der Kolbennut 26, so daß sich bei mit Vorspannung in die Nut 26 zur Anlage an der Zylinderwandung eingelegten Dichtungsring 27 zwischen dem Dichtungsring 27 und dem Kolben 17 im Bereich der Kerhe 29 ein Fließweg zur Membrankammer 24 an der Außenseite des Zylinders 16 ergibt. Als sich an die Kerbe 29 anschließender Fließweg im Bereich der gegenseitigen Anlage von Zylinder 16 und Kolben 17 reicht die Bautoleranz der jeweiligen Bauteile aus, weil die Flüssigkeit sich nach dem Durchtritt durch die Kerbe 29 über die Umfangsfläche des Kolbens 17 verteilend in die äußere Membrankammer 24 strömen kann.

Der erfindungsgemäße Schließdämpfer arbeitet wie folgt: Beim Schließen der sanitären Wasserarmatur durch Druck auf den Griffhebel 13 fährt der Kolben 17 in den Zylinder 16 ein, so daß die in dem Zylinderinnenraum 25 befindliche Flüssigkeit verdrängt wird und über die bereits am Kolbenende beginnende Kerbe 29 zwischen dem Dichtungsring 27 und dem Kolben 17 sowie den Abschnitt 30 der Kerbe und den Spalt zwischen Kolben 17 und Zylinder 16 in die durch die Aufwölbung der Membran 20 geschaffene Membrankammer 24 strömt. Bei einer hohen Schließgeschwindigkeit durch schlagartiges Niederdrücken des Griffhebels 13 verschiebt sich infolge des ansteigenden Flüssigkeitsdrucks der Dichtungsring 27 in der Nut 26 zur Anlage an deren oberen Rand und verengt dabei den Strömungsquerschnitt der Kerbe 29, so daß die Schließgeschwindigkeit herabgesetzt wird. Da aufgrund des Abschnittes 30 der Dichtungsring 27 die Kerbe 29 nicht vollständig verschließen kann, ist aber eine Blockierung dieses Fließweges auch bei schlagartigem Schließen der Wasserarmatur ausgeschlossen.

Wird die Wasserarmatur durch Bewegung des Griffhebels 13 in seine Öffnungsstellung geöffnet, so folgt der Kolben 17 der Öffnungsbewegung aufgrund der Wirkung der Feder 19, wobei das Wasser von der Membrankammer 24 über den Spalt zwischen Kolben 17 und Zylinder 16 an dem Dichtungsring 27 vorbei in den Zylinderinnenraum 25 strömt. Bei dieser Strömungsrichtung des Wassers wird der Dichtungsring 27 in seiner Nut 26 nach unten gedrückt, so daß er den vollen Strömungsquerschnitt der Kerbe 29 freigibt, so daß sich ein ungehindertes, schnelles Öffnen der Armatur ergibt.

Es versteht sich, daß die Anwendung des erfindungsgemäßen Schließdämpfers nicht nur bei Eingriff-Mischbatterien, sondern auch bei Zweigriff-Armaturen Anwendung finden kann.

## Patentansprüche

1. Sanitäre Wasserarmatur, insbesondere in der Form einer Eingriff-Mischbatterie, mit einem Gehäuse (10), mit einem Betätigungsgriff (13) und mit einer Scheiben, Kolben, Kugeln oder dergleichen aufweisenden Steuereinheit sowie mit einem zwischen dem Griff (13) und der Steuereinheit oder zwischen dem Griff (13) und dem Armaturengehäuse (10) angeordneten Schließdämpfer (15) zur Verlängerung der Schließzeit und Herabsetzung der Schließgeschwindigkeit, wobei der Schließdämpfer (15) als flüssigkeitsgefüllte Kolben-Zylinder-Einheit (16, 17) ausgebildet ist, dadurch gekennzeichnet, daß eine flüssigkeitsdichte Membran (20) die Kolben-Zylinder-Einheit (16, 17) außen umschließend mit dem Zylinder (16) einerseits und dem Kolben (17) andererseits jeweils flüssigkeitsdicht verbunden ist und bei eingeschobenem Kolben (17) eine Membrankammer (24) ausbildet und daß zwischen dem Innenraum (25) des gegen den Kolben (17) abgedichteten Zylinders (16) und der von der Membran (20) umschlossenen Außenseite des Zylinders (16) eine Fließverbindung besteht.

2. Wasserarmatur nach Anspruch 1, dadurch gekennzeichnet, daß der Kolben (17) gegen den Zylinder (16) über einen in eine umlaufende Kolbennut (26) eingelegten Dichtungsring (27) flüssigkeitsdicht abgedichtet ist, wobei die Nut (26) über einen Umfangsabschnitt (28) eine Kerbe (29) zur Ausbildung einer den Dichtungsring (27) umgehenden Fließverbindung vom Zylinderinnenraum (25) zur Membrankammer (24) aufweist.

3. Wasserarmatur nach Anspruch 2, dadurch gekennzeichnet, daß die in Bewegungsrichtung des Kolbens (17) bestimmte Höhe der Kolbennut (26) größer ist als der Durchmesser des Dichtungsringes (27).

4. Wasserarmatur nach Anspruch 2 oder 3, dadurch gekennzeichnet, daß die Kerbe (29) als eine kolbenseitige Vertiefung der Kolbennut (26) ausgebildet ist und sich bis zum Kolbenende erstreckt.

5. Wasserarmatur nach einem der Ansprüche 2 bis 4, dadurch gekennzeichnet, daß die Kerbe (29) mit einem sich in Ausschubrichtung des Kolbens (17) verengenden Abschnitt (30) die zugeordnete Oberkante der Kolbennut (26) überragt.

6. Wasserarmatur nach einem der Ansprüche 1 bis 5, dadurch gekennzeichnet, daß die Fließverbindung zwischen Zylinderinnenraum (25) und der Membrankammer (24) im Bereich der Anlage des Kolbens (17) am Zylinder (16) durch die Abmessungstoleranzen des Zylinders einerseits und des Kolbens andererseits gebildet ist.

7. Wasserarmatur nach einem der Ansprüche 2 bis 5, dadurch gekennzeichnet, daß die Fließverbindung zwischen Zylinderinnenraum (25) und Membrankammer (24) durch eine sich an die Kerbe (29) anschließende Längsnut in der Kolben- und/oder Zylinderwandung gebildet ist.

8. Wasserarmatur nach einem der Ansprüche 1 bis 7, dadurch gekennzeichnet, daß zwischen Zylinder (16) und Kolben (17) eine den Kolben in dessen Ausschubrichtung belastende Feder (19) angeordnet ist.

## Claims

1. Sanitary water fitting, in particular in the form of a single-lever mixing tap, having a housing (10), having an operating lever (13) and having a control unit which has washers, plungers, balls or the like, and also having a close-off damper (15) arranged between the lever (13) and the control unit or between the lever (13) and the housing (10) of the fitting for prolonging the closing time and reducing the closing speed, with the close-off damper (15) being formed as a fluid-filled plunger-cylinder-unit (16, 17), characterised in that a fluid-tight membrane (20) externally surrounding the plunger-cylinder-unit (16, 17) is connected with the cylinder (16), on the one hand, and with the plunger (17), on the other hand, in each case in a fluid-tight manner, and when the plunger (17) is pushed in forms a membrane chamber (24), and in that a flow connection exists between the interior space (25) of the cylinder (16), which is sealed in respect of the plunger (17), and the exterior of the cylinder (16) surrounded by the membrane (20).

2. Water fitting according to claim 1, characterised in that the plunger (17) is sealed in a fluid-tight manner in respect of the cylinder (16) by way of a sealing ring (27) inserted into a circumferential plunger groove (26), with the groove (26) having a notch (29) over a section (28) of the periphery for the purpose of forming a flow connection, by-passing the sealing ring (27), from the interior space (25) of the cylinder to the membrane chamber (24).

3. Water fitting according to claim 2, characterised in that the height of the plunger groove (26), determined in the direction of movement of the plunger (17), is greater than the diameter of the sealing ring (27).

4. Water fitting according to claim 2 or 3, characterised in that the notch (29) is formed as a recess of the plunger groove (26) on the plunger side and extends as far as the end of the plunger.

5. Water fitting according to one of the claims 2 to 4, characterised in that the notch (29) overlaps the associated upper edge of the plunger groove (26) with a section (30) which narrows in the direction in which the plunger (17) is pushed out.

6. Water fitting according to one of the claims 1 to 5, characterised in that the flow connection between cylinder interior space (25) and the membrane chamber (24) is formed in the region in which the plunger (17) rests against the cylinder (16) as a result of the dimensional tolerances of the cylinder, on the one hand, and of the plunger, on the other hand.

7. Water fitting according to one of the claims 2 to 5, characterised in that the flow connection between cylinder interior space (25) and membrane chamber (24) is formed by means of a longitudinal groove which links up with the notch (29) in the plunger and/or cylinder wall.

8. Water fitting according to one of the claims 1 to 7, characterised in that a spring (19) loading the plunger in the direction in which the latter is pushed out is arranged between cylinder (16) and plunger (17).

## Revendications

1. Robinetterie d'eau sanitaire, se présentant en particulier sous la forme d'un robinet mélangeur à une poignée avec un corps (10), avec une poignée d'actionnement (13) et une unité de commande présentant des disques, des pistons, des billes ou analogues, ainsi qu'avec un amortisseur de fermeture (15), disposé entre la poignée (13) et l'unité de commande ou entre la poignée (13) et le corps du robinet (10), en vue de prolonger le temps de fermeture et de diminuer la vitesse d'écoulement, l'amortisseur de fermeture (15) étant réalisé sous forme d'ensemble piston-cylindre (16, 17) rempli d'un liquide, caractérisée en ce qu'une membrane (20) étanche aux liquides est reliée, d'une part au cylindre (16) en entourant extérieurement l'ensemble piston-cylindre (16, 17), et d'autre part, au piston (17), chaque liaison étant étanche aux liquides, et constitue une chambre de membrane (24) lorsque le piston (17) est enfoncé, et en ce qu'une liaison hydraulique est établie entre l'espace intérieur (25) du cylindre (16) isolé de façon étanche par rapport au piston (17) et la face extérieure, entourée par la membrane (20) du cylindre (16).

2. Robinetterie d'eau selon la revendication 1, caractérisée en ce que le piston (17) est isolé de façon étanche aux liquides, par rapport au cylindre (16), par l'intermédiaire d'une bague d'étanchéité (27) insérée dans une gorge périphérique (26) du piston, la gorge (26) présentant sur un secteur périphérique (28) une entaille (29) destinée à établir une liaison hydraulique, contournant la bague d'étanchéité (27), entre l'espace intérieur (25) du cylindre et la chambre de membrane (24).

3. Robinetterie d'eau selon la revendication 2, caractérisée en ce que la hauteur, mesurée dans la direction du déplacement du piston (17) de la gorge de piston (26) est supérieure au diamètre de la bague d'étanchéité (27).

4. Robinetterie d'eau selon la revendication 2 ou 3, caractérisée en ce que l'entaille (29) est réalisée sous la forme d'une cavité, située côté piston, de la gorge de piston (26) et s'étend jusqu'à l'extrémité du piston.

5. Robinetterie d'eau selon l'une des revendications 2 à 4, caractérisée en ce que l'entaille (29) dépasse de l'arête supérieure associée de la gorge de piston (26), d'une section (30) allant en rétrécissant dans la direction de la sortie du piston (17).

6. Robinetterie d'eau selon l'une des revendications 1 à 5, caractérisée en ce que la liaison hydraulique entre l'espace intérieur (25) du cylindre et la chambre de membrane (24), dans la zone de l'appui du piston (17) sur le cylindre (16), est formée d'une part, par les tolérances dimensionnelles du cylindre et, d'autre part, par celles du piston.

7. Robinetterie d'eau selon l'une des revendications 2 à 5, caractérisée en ce que la liaison hydraulique entre espace intérieur (25) du cylindre et chambre de membrane (24) est formée par une rainure longitudinale, se raccordant à l'entaille (29), ménagée dans la paroi de piston et/ou de cylindre.

8. Robinetterie d'eau selon l'une des revendications 1 à 7, caractérisée en ce qu'un ressort (19) agissant sur le piston en direction de sa sortie, est disposé entre le cylindre (16) et le piston (17).
